# EUROPEAN PATENT SPECIFICATION

(11) **EP 4 009 262 B1**
(45) Date of publication and mention of the grant of the patent: **06.11.2024**
(21) Application number: 20211981.4
(22) Date of filing: 04.12.2020
(51) Int. Cl.: G06Q 20/20, G06Q 20/32, G06Q 20/38, G06Q 20/40

(54) **DEVICES, METHODS AND A SYSTEM FOR SECURE ELECTRONIC PAYMENT TRANSACTIONS**
VORRICHTUNGEN, VERFAHREN UND SYSTEM FÜR SICHERE ELEKTRONISCHE BEZAHLTRANSAKTIONEN
DISPOSITIFS, PROCÉDÉS ET SYSTÈME DE TRANSACTIONS DE PAIEMENTS ÉLECTRONIQUES SÉCURISÉES

(43) Date of publication of application: 08.06.2022
(73) Proprietor: Rubean AG, 81379 München (DE)
(72) Inventor: GEUPEL, Hermann, 81925 München (DE); SPITZ, Stephan, 85757 Karlsfeld (DE)
(74) Representative: Patentship Patentanwaltsgesellschaft mbH

(56) References cited:
- US-A1- 2017 085 649
- US-A1- 2019 207 953
- US-A1- 2019 340 599

## Description

### TECHNICAL FIELD

The invention relates to electronic payment transactions. More specifically, the invention relates to devices, methods and a system for secure electronic payment transactions involving a mobile merchant communication device, in particular a merchant mobile phone.

### BACKGROUND OF THE INVENTION

Conventionally a lot of electronic payment transactions between a merchant and a customer, who wants to pay, for instance, for goods or services of the merchant, often involve an interaction between a point-of-sale (POS) terminal of the merchant and a payment card (e.g. credit card or debit card) of the customer. After the customer interfaces the payment card with the POS terminal, and the POS terminal reads the account number from the payment card, the POS terminal may generate an online authorization request (e.g. authorization amount, and account number), and transmit the authorization request to a payment server. If the customer's account has a credit or balance that is sufficient to process the payment, the payment server generally settles the authorized amount with the customer's account, generates an authorization response message, and transmits the authorization response message to the POS terminal.

Document US 2019/207953 A1 discloses a method and system to determine whether a payment terminal has been tampered with.

Due to the widespread adoption of mobile phones, tablet computers and other types of COTS (commercial-off-the-shelf) devices in more and more electronic payment transactions POS terminals are being replaced, for instance, by mobile phones in that for processing a payment transaction a merchant mobile phone interacts with a payment card and/or a mobile phone of the customer. Often the authorization of the payment transaction requires the customer to enter a PIN or the like, i.e. security relevant data of the customer, into a virtual or physical PIN pad of the merchant mobile phone. Therefore, it has to be ensured that the security relevant data of the customer for authorizing the payment transaction are processed by the merchant mobile phone in a secure manner, i.e. that the security status of the merchant mobile phone is integer.

### SUMMARY OF THE INVENTION

It is an object of the invention to provide improved devices, methods and a system for secure electronic payment transactions.

The foregoing and other objects are achieved by the subject matter of the independent claims. Further implementation forms are apparent from the dependent claims, the description and the figures.

According to a first aspect a mobile merchant communication device for processing an electronic payment transaction with a customer payment device of a customer is provided, as defined in claim 1.

The mobile merchant communication device may be, for instance, a mobile phone, a tablet computer or another type of COTS device of the merchant.

The mobile merchant communication device comprises a communication interface configured to transmit a first integrity status data set to a monitoring server, wherein the first integrity status data set is indicative of a current integrity status of the mobile merchant communication device. The communication interface is further configured, in response to a determination of the integrity status of the mobile merchant communication device by the monitoring server, to receive an integrity status message from the monitoring server, wherein the integrity status message comprises information about the integrity status of the mobile merchant communication device determined by the monitoring server and a first time stamp.

The mobile merchant communication device further comprises a processing circuitry configured to generate a second time stamp and to add the second time stamp to the integrity status message.

The communication interface is further configured to forward the integrity status message, including the information about the integrity status of the mobile merchant communication device determined by the monitoring server, the first time stamp and the second time stamp, to a mobile customer communication device of the customer for creating trust of the customer in the mobile merchant communication device.

Advantageously, the first time stamp allows the mobile customer communication device and the customer to verify that the integrity status message originally generated by the monitoring server is not a replay of an old message, while the second time stamp allows the mobile customer communication device and the customer to verify that the mobile merchant communication device is not fraudulent, thereby increasing the security of the payment transaction.

In a further embodiment, the customer payment device is an electronic chip card, e.g. a payment card, wherein the communication interface is configured to communicate with the electronic chip card. In an embodiment, the communication interface of the mobile merchant communication device may comprise, for instance, an NFC interface.

In a further embodiment, the customer payment device is the mobile customer communication device, e.g. a customer mobile phone. In other words, in an embodiment, the mobile merchant communication device is configured to send the integrity status message to the mobile customer communication device and process with electronic payment with the mobile customer communication device, e.g. the customer mobile phone. For instance, the mobile customer communication device may implement a payment card in software.

In a further embodiment, the processing circuitry is further configured to generate a digital signature of the integrity status message, including the information about the integrity status of the mobile merchant communication device determined by the monitoring server, the first time stamp and the second time stamp, and to forward the digital signature together with the integrity status message to the mobile customer communication device.

In a further embodiment, the integrity status message received from the monitoring server further includes a digital signature generated by the monitoring server of the information about the integrity status of the mobile merchant communication device determined by the monitoring server and/or the first time stamp.

In a further embodiment, the communication interface is configured to transmit at a plurality of times a respective second integrity status data set to the monitoring server, wherein the respective second integrity status data set is indicative of the current integrity status of the mobile merchant communication device. In an embodiment, the plurality of times may be regularly spaced in time. In an embodiment, a monitoring client may be implemented by the processing circuitry of the mobile merchant communication device, wherein the monitoring client is configured to actively send at the plurality of scheduled times the respective second integrity status data set to the monitoring server.

In a further embodiment, the first integrity status data set and/or the second integrity status data set comprises data indicative of whether a bootloader of the mobile merchant communication device has been unlocked.

In a further embodiment, the first integrity status data set and/or the second integrity status data set comprises a chain of certificates for attesting the integrity of one or more cryptographic keys of the mobile merchant communication device.

In a further embodiment, the mobile merchant communication device may be configured to execute a payment software application configured to process the payment transaction, wherein the first integrity status data set and/or the second integrity status data set comprises data indicative of a version number of the payment software application.

In a further embodiment, the first integrity status data set and/or the second integrity status data set comprises data from a gyro sensor of the mobile merchant communication device.

In a further embodiment, the first integrity status data set and/or the second integrity status data set comprises a list of software applications installed on the mobile merchant communication device.

According to a second aspect a monitoring server for monitoring an integrity status of a mobile merchant communication device is provided, wherein the mobile merchant communication device is configured to interact with a customer payment device for processing a payment transaction, as defined in claim 8.

The monitoring server comprises a communication interface configured to obtain a first integrity status data set from the mobile merchant communication device, wherein the first integrity status data set is indicative of a current integrity status of the mobile merchant communication device. Moreover, the monitoring server comprises a processing circuitry configured to determine the current integrity status of the mobile merchant communication device based on the first integrity status data set.

The communication interface of the monitoring server is further configured to, in response to the determination of the integrity status of the mobile merchant communication device, transmit an integrity status message to the mobile merchant communication device, wherein the integrity status message comprises information about the integrity status of the mobile merchant communication device determined by the processing circuitry and a first time stamp generated by the processing circuitry.

The communication interface of the monitoring server is configured to, in response to the determination of the integrity status of the mobile merchant communication device, transmit the integrity status message to the mobile merchant communication device for the mobile merchant communication device to generate a second time stamp, to add the second time stamp to the integrity status message and to forward the integrity status message, including the information about the integrity status of the mobile merchant communication device determined by the monitoring server, the first time stamp and the second time stamp, to a mobile customer communication device.

In a further embodiment, the communication interface is further configured to obtain at a plurality of times a respective second integrity status data set from the mobile merchant communication device, wherein each second integrity status data set is indicative of the current integrity status of the mobile merchant communication device and wherein the processing circuitry is configured to determine the current integrity status of the mobile merchant communication device on the basis of the respective second integrity status data set. In an embodiment, the plurality of times may be regularly spaced in time. As will be appreciated, obtaining the respective second integrity status data set from the mobile merchant communication device at a plurality of points in time can be considered as background monitoring of the integrity status of the mobile merchant communication device by the monitoring server.

In a further embodiment, the first integrity status data set and/or the second integrity status data set comprises data indicative of whether a bootloader of the mobile merchant communication device is unlocked.

In a further embodiment, the first integrity status data set and/or the second integrity status data set comprises a chain of certificates for attesting the integrity of one or more cryptographic keys of the mobile merchant communication device, wherein the processing circuitry is configured to determine the current integrity status of the mobile merchant communication device by verifying the integrity of the one or more cryptographic keys of the mobile merchant communication device based on the chain of certificates.

In a further embodiment, the mobile merchant communication device comprises a payment software application configured to process the payment transaction, wherein the first integrity status data set and/or the second integrity status data set comprises data indicative of a version number of the payment software application and wherein the processing circuitry is configured to determine the current integrity status of the mobile merchant communication device based on the version number of the payment software application.

In a further embodiment, the first integrity status data set and/or the second integrity status data set comprises data from a gyro sensor of the mobile merchant communication device, wherein the processing circuitry is configured to determine the current integrity status of the mobile merchant communication device by determining whether the data from the gyro sensor of the mobile merchant communication device indicate a movement and/or rotation of the mobile merchant communication device.

In a further embodiment, the first integrity status data set and/or the second integrity status data set comprises a list of software applications installed on the mobile merchant communication device, wherein the processing circuitry is configured to determine the current integrity status of the mobile merchant communication device by comparing the list of software applications installed on the mobile merchant communication device with a black list of software applications.

In a further embodiment, the respective second integrity status data set comprises more integrity status data indicative of the current integrity status of the mobile merchant communication device than the first integrity status data set. In an embodiment, the first integrity status data set may be a subset of a respective second integrity status data set. In an embodiment, the monitoring server may comprise a database configured to persistently store the first integrity status data set and/or the plurality of second integrity status data sets.

In a further embodiment, the communication interface is configured to obtain prior to obtaining the next second integrity status data set the first integrity status data set from the mobile merchant communication device for processing the payment transaction , in case the time elapsed since obtaining the most recent second integrity status data set is larger than a pre-defined time interval threshold. In other words, in an embodiment, the monitoring server is configured to obtain the first integrity status data set from the mobile merchant communication device "on demand", only if the most recent background monitoring event, i.e. the most recent second integrity status data set has been too long ago, as defined by the time interval threshold.

In a further embodiment, the processing circuitry is configured, in response to a request from the payment server, to determine the current integrity status of the mobile merchant communication device on the basis of the first integrity status data set and/or the second integrity status data set and to send information about the current integrity status of the mobile merchant communication device to the payment server. Based on the information about the current integrity status of the mobile merchant communication device the payment server may further process the payment transaction, e.g. authorize or block the processing of the payment.

In a further embodiment, the communication interface is further configured to receive a digital signature of the first integrity status data set and/or the respective second integrity status data set and to verify the digital signature of the first integrity status data set and/or the respective second integrity status data set with a public key of the mobile merchant communication device.

According to a third aspect an electronic payment system is provided, as defined in claim 20. The electronic payment system comprises a mobile merchant communication device according to a first aspect and a monitoring server according to the second aspect. Moreover, the electronic payment system comprises at least one customer payment device and/or a mobile customer communication device and a payment transaction server. The payment transaction server is configured to transmit a request to the monitoring server for information about a current integrity status of the mobile merchant communication device and to authorize a payment transaction based on the information about the current integrity status of the mobile merchant communication device.

According to a fourth aspect a method for processing an electronic payment transaction with a mobile merchant communication device is provided, as defined in claim 21.

The method comprises the steps of:
transmitting a first integrity status data set to a monitoring server, wherein the first integrity status data set is indicative of a current integrity status of the mobile merchant communication device;
in response to a determination of the integrity status of the mobile merchant communication device by the monitoring server based on the first integrity status data set, receiving an integrity status message from the monitoring server, wherein the integrity status message comprises information about the integrity status of the mobile merchant communication device determined by the monitoring server and a first time stamp provided by the monitoring server;
generating a second time stamp and adding the second time stamp to the integrity status message; and
forwarding the integrity status message, including the information about the integrity status of the mobile merchant communication device determined by the monitoring server, the first time stamp provided by the monitoring server and the second time stamp, to a mobile customer communication device.

The method according to the fourth aspect of the present invention can be performed by the mobile merchant communication device according to the first aspect of the present invention. Thus, further features of the method according to the fourth aspect of the present invention result directly from the functionality of the mobile merchant communication device according to the first aspect of the present invention as well as its different embodiments described above and below.

A computer program product may comprise a non-transitory computer-readable storage medium for storing program code which causes a computer or a processor to perform the method according to the fourth aspect, when the program code is executed by the computer or the processor, is provided.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an electronic payment system according to an embodiment, including a mobile merchant communication device according to an embodiment and a monitoring server according to an embodiment;
Fig. 2 shows a signaling diagram illustrating the process flow implemented by the components of the electronic payment system of figure 1; and
Fig. 3 shows a flow diagram illustrating steps of a method according to an embodiment.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

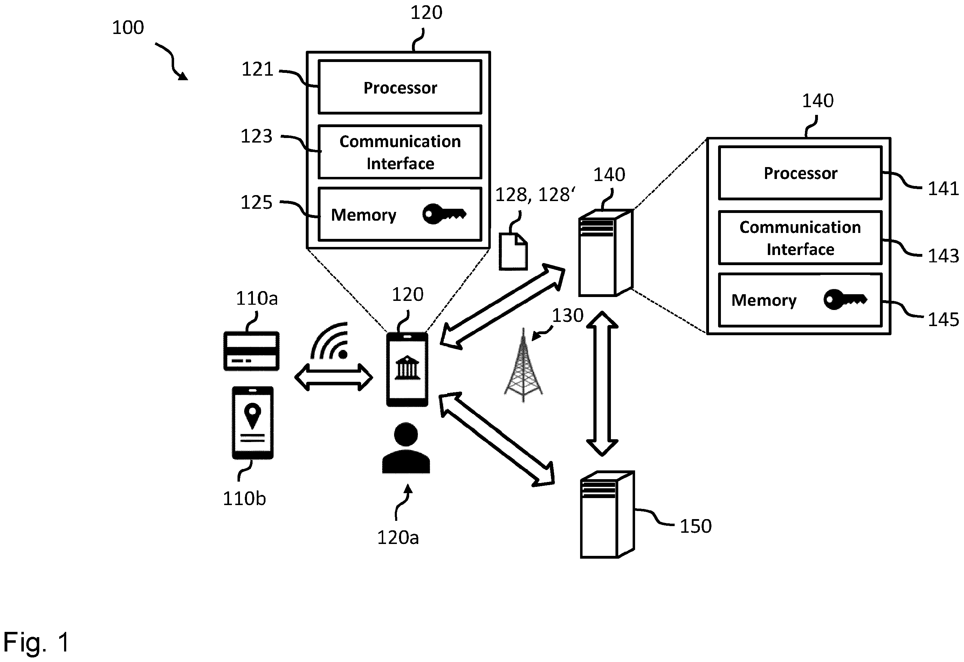

Figure 1 shows a schematic diagram illustrating an electronic payment system 100 according to an embodiment for processing an electronic payment transaction between a mobile merchant communication device 120 operated by a merchant 120a and a customer payment device 110a. The mobile merchant communication device 120 may be, for instance, a mobile phone, tablet computer or the like operated by the merchant 120a. As illustrated in figure 1, the mobile merchant communication device 120 may comprise a processor 121 for processing data, a communication interface 123 for communicating with the other components of the payment system 100 and a memory 125 for storing data. The mobile merchant communication device 120 may comprise a physical or virtual PIN pad allowing the customer 110a to enter a secret PIN for authorizing the payment transaction.

The customer payment device 110a may be an electronic chip card, i.e. a payment card 110a of a customer or implemented in a mobile customer communication device 110b, e.g. a mobile phone 11 0b, operated by the customer. In an embodiment, the communication interface 123 of the mobile merchant communication device 120 may comprise an NFC interface for communicating with the mobile customer communication device 110b.

In addition to the mobile merchant communication device 120 and the mobile customer communication device 110b the electronic payment system 100 illustrated in figure 1 further comprises a monitoring server 140 for monitoring a security integrity status of the mobile merchant communication device 120 and a payment server 150 for processing an electronic payment transaction between the mobile merchant communication device 120 and the customer payment device 110a. As illustrated in figure 1, the mobile merchant communication device 120 may be configured to communicate with the monitoring server 140 and/or the payment server 150 via a wireless and/or wired communication network 130. The mobile merchant communication device 120 is configured to interact with the customer payment device 110a, e.g. an electronic chip card, i.e. payment card 110a of the customer or the mobile customer communication device 11 0b, for processing an electronic payment transaction. In an embodiment, the mobile merchant communication device 120 may be a mobile phone, tablet computer or the like of the merchant 120a.

As illustrated in figure 1, the mobile merchant communication device 120 comprises a communication interface 123 configured to transmit a fist integrity status data set 128 to the monitoring server 140, wherein the first integrity status data set 128 is indicative of the current integrity status of the mobile merchant communication device 120. The communication interface 123 is further configured, in response to a determination of the integrity status of the mobile merchant communication device 120 by the monitoring server 140, to receive an integrity status message from the monitoring server 140, wherein the integrity status message comprises information about the integrity status of the mobile merchant communication device 120 determined by the monitoring server 140 and a first time stamp.

The mobile merchant communication device 120 further comprises a processing circuitry 121 configured to generate a second time stamp and to add the second time stamp to the integrity status message. The communication interface 123 is further configured to forward the integrity status message, including the information about the integrity status of the mobile merchant communication device 120 determined by the monitoring server 140, the first time stamp and the second time stamp, to the mobile customer communication device 110b for processing and authorizing the electronic payment transaction.

As illustrated in figure 1, the monitoring server 140 comprises a communication interface 143 configured to obtain the first integrity status data set 128 from the mobile merchant communication device 120, wherein, as already described above, the first integrity status data set 128 is indicative of a current integrity status of the mobile merchant communication device 120. Moreover, the monitoring server 140 comprises a processing circuitry 141 configured to determine the current integrity status of the mobile merchant communication device 120 based on the first integrity status data set 128. The communication interface 143 of the monitoring server 140 is further configured to, in response to the determination of the integrity status of the mobile merchant communication device 120, transmit the integrity status message to the mobile merchant communication device 120, wherein, as already described above, the integrity status message comprises information about the integrity status of the mobile merchant communication device 120 and the first time stamp generated by the processing circuitry 141 of the monitoring server 140.

Advantageously, the first time stamp allows the mobile customer communication device 110b to verify that the integrity status message originally generated by the monitoring server 140 is not a replay of an old message, while the second time stamp provided by the mobile merchant communication device 120 allows the mobile customer communication device 110b to verify that the mobile merchant communication device 120 is not fraudulent or compromised, thereby increasing the security of the payment transaction.

In an embodiment, the communication interface 143 of the monitoring server 140 is configured to obtain at a plurality of times a respective second integrity status data set 128' from the mobile merchant communication device 120, wherein the data of each second integrity status data set 128' is indicative of a current integrity status of the mobile merchant communication device 120. Moreover, the processing circuitry 141 is configured to determine a current integrity status of the mobile merchant communication device 120 on the basis of the respective second integrity status data set 128'. As will be appreciated, obtaining the respective second integrity status data set 128' from the mobile merchant communication device 120 at a plurality of points in time can be considered as background monitoring of the integrity status of the mobile merchant communication device 120 by the monitoring server 140. In an embodiment, the monitoring server 140 may be configured to obtain the respective second integrity status data 128' from the mobile merchant communication device 120 by actively requesting the respective second integrity status data set 128' from the mobile merchant communication device 120 or by receiving the respective second integrity status data set 128' from the mobile merchant communication device 120 without a preceding request from the monitoring server 140, for instance, in parallel to an indication by the mobile merchant communication device 120 to the payment server 150 that an electronic payment is to be processed.

In an embodiment, the communication interface 143 of the monitoring server 140 is configured to obtain prior to obtaining the next scheduled second integrity status data set 128' the first integrity status data set 128 from the mobile merchant communication device 120, in case the time elapsed since obtaining the most recent second integrity status data set 128' is larger than a pre-defined time interval threshold. In other words, the mobile merchant communication device 120 is configured to actively send, i.e. push the first integrity status data set 128 to the monitoring server 140 for processing the payment transaction, only if the most recent background monitoring event has been too long ago, as defined by the time interval threshold. In an embodiment, a monitoring client may be implemented by the processing circuitry 121 of the mobile merchant communication device 120, wherein the monitoring client is configured to actively send at the plurality of scheduled times the respective second integrity status data set 128' to the monitoring server 140. The monitoring client may be configured to subscribe with the monitoring server 140 for enabling the monitoring server 140 to monitor the integrity status of the mobile merchant communication device 120.

In an embodiment, the processing circuitry 141 of the monitoring server 140 is configured, in response to a request from the payment server 150, to determine the current integrity status of the mobile merchant communication device 120 on the basis of the first integrity status data set 128 and/or the second integrity status data set 128' and to send information about the current integrity status of the mobile merchant communication device 120 to the payment server 150. Based on the information about the current integrity status of the mobile merchant communication device 120 the payment server 150 may further process the payment transaction, e.g. depending on the current integrity status of the mobile merchant communication device 120 authorize or block the further processing of the payment transaction.

In an embodiment, the information about the current integrity status of the mobile merchant communication device 120 sent by the monitoring server 140 to the payment server 150 may comprise binary information, such as "integer" or "non-integer". In a further embodiment, the monitoring server 140 may be configured to determine a more differentiated integrity status of the mobile merchant communication device 120 on the basis of the first and/or second integrity status data set 128, 128', such as by employing a "traffic light system", including a green integer status, a yellow questionable status and a red non-integer status of the mobile merchant communication device 120. In an embodiment, the monitoring server 140 may comprise a database implemented in the memory 145 and configured to persistently store the first integrity status data set 128 and/or the plurality of second integrity status data sets 128'.

In an embodiment, the first integrity status data set 128 and the respective second integrity status data set 128' may comprise the same type of data indicative of the integrity status of the mobile merchant communication device 120. In a further embodiment, the respective second integrity status data set 128' may comprise more, i.e. further integrity status data indicative of the current integrity status of the mobile merchant communication device 120 than the first integrity status data set 128. In an embodiment, the first integrity status data set 128 may be a subset of a respective second integrity status data set 128'. In a further embodiment, the processing circuitry 141 of the monitoring server 140 may be configured to implement machine learning, e.g. a neural network for determining the current integrity status on the basis of the first and/or second integrity status data set 128, 128'. As generally the monitoring server 140 will monitor a plurality of mobile merchant communication devices like the mobile merchant communication device 120 shown in figure 1, this machine learning implemented by the processing circuitry 141 can be trained and continuously improved on the basis of the monitoring data obtained from these devices. This allows the monitoring server 140, for instance, to adapt to new emerging attacks on the mobile merchant communication devices.

In an embodiment, if the monitoring server 140 determines the mobile merchant communication device 120 on the basis of the first and/or second integrity status data set 128, 128' to be integer, it may respond to the monitoring client implemented on the mobile merchant communication device 120 with an indication of when or by when the monitoring server 140 expects to receive the next second integrity status data set 128' as part of the regular background monitoring. If the monitoring server 140 determines the mobile merchant communication device 120 on the basis of the first and/or second integrity status data set 128, 128' to be non-integer (possibly due to an attack by a malicious third party), it may instruct the monitoring client to delete all sensitive data of the payment application.

In an embodiment, the processing circuitry 141 of the monitoring server 140 is configured, in response to a request from the payment server 150, to determine the current integrity status of the mobile merchant communication device 120 on the basis of the most recent second integrity status data set 128' and the first integrity status data set 128 and to send information about the current integrity status of the mobile merchant communication device 120 determined on the basis of the most recent second integrity status data set 128' and the first integrity status data set 128 to the payment server 150. For instance, in an embodiment, where the first integrity status data set 128 is a subset of a respective second integrity status data set 128', the processing circuitry 141 of the monitoring server 140 may be configured to determine the current integrity status of the mobile merchant communication device 120 on the basis of the data of the first integrity status data set 128 and the additional data of the most recent second integrity status data set 128' not included in the first integrity status data set 128.

In an embodiment, the communication interface 143 of the monitoring server 140 is configured, in response to the request from the payment server 150, to send information about the current integrity status of the mobile merchant communication device 120 determined on the basis of the most recent second integrity status data set 128' to the payment server 150, in case the time elapsed since obtaining the most recent second integrity status data set 128' is not larger than the time interval threshold.

In an embodiment, the plurality of times, when the monitoring server 140 obtains the respective second integrity status data set 128', may be regularly spaced in time, i.e. differ in time by a substantially constant value. For instance, in an embodiment the monitoring server 140 may be configured to obtain the respective second integrity status data set 128' every 5 minutes from the mobile merchant communication device 120. As already described above, in an embodiment, a monitoring client may be implemented by the processing circuitry 121 of the mobile merchant communication device 120, wherein the monitoring client is configured to actively send at the plurality of scheduled times the respective second integrity status data set 128' to the monitoring server 140.

In an embodiment, the communication interface 143 of the monitoring server 140 may be further configured to receive a digital signature of the integrity status data, i.e. the respective second integrity status data set 128' and/or the first integrity status data set 128, signed by the mobile merchant communication device 120 and to verify the digital signature of the integrity status data with a public key of the mobile merchant communication device 120.

In an embodiment, the first integrity status data set 128 and/or the second integrity status data set 128' comprises data indicative of whether a bootloader of the mobile merchant communication device 120 has been unlocked. In an embodiment, the monitoring server 140 may determine the integrity status of the mobile merchant communication device 120 to be unsafe, i.e. non-integer, in case the first integrity status data set 128 and/or the second integrity status data set 128' indicates that the bootloader of the mobile merchant communication device 120 has been unlocked.

In an embodiment, the first integrity status data set 128 and/or the second integrity status data set 128' comprises a chain of certificates for attesting the integrity of one or more cryptographic keys of the mobile merchant communication device 120, wherein the processing circuitry 141 of the monitoring server 140 is configured to determine the current integrity status of the mobile merchant communication device 120 by verifying the integrity of the one or more cryptographic keys of the mobile merchant communication device 120 based on the chain of certificates.

In a further embodiment, the mobile merchant communication device 120 may be configured to execute a payment software application configured to process the payment transaction, wherein the first integrity status data set 128 and/or the second integrity status data set 128' comprises data indicative of a version number of the payment software application and wherein the processing circuitry 141 of the monitoring server 140 is configured to determine the current integrity status of the mobile merchant communication device 120 based on the version number of the payment software application. In an embodiment, the monitoring server 140 may determine the integrity status of the mobile merchant communication device 120 to be unsafe, i.e. non-integer, in case the version number of the payment software application running on the mobile merchant communication device 120 is not the most recent version of the payment software application.

In an embodiment, the first integrity status data set 128 and/or the second integrity status data set 128' comprises data from a gyro sensor of the mobile merchant communication device 120, wherein the processing circuitry 141 of the monitoring server 140 is configured to determine the current integrity status of the mobile merchant communication device 120 by determining whether the data from the gyro sensor of the mobile merchant communication device 120 indicates a movement and/or rotation of the mobile merchant communication device 120.

In an embodiment, the first integrity status data set 128 and/or the second integrity status data set 128' comprises a list of software applications installed on the mobile merchant communication device 120, wherein the processing circuitry 141 of the monitoring server 140 is configured to determine the current integrity status of the mobile merchant communication device 120 by comparing the list of software applications installed on the mobile merchant communication device 120 with a black list of software applications. In an embodiment, the monitoring server 140 may determine the integrity status of the mobile merchant communication device 120 to be unsafe, i.e. non-integer, in case the list of software applications installed on the mobile merchant communication device 120 includes software applications from the blacklist. This blacklist may be maintained in a database stored in the memory 145 of the monitoring server 140.

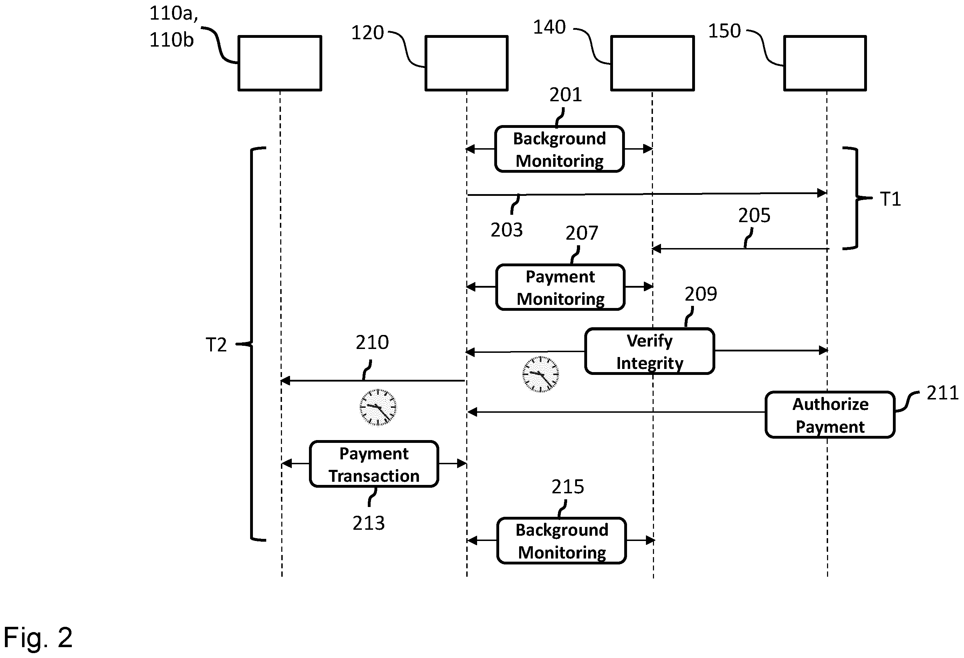

Figure 2 shows a signaling diagram illustrating the interaction of the mobile merchant communication device 120 and the monitoring server 140 with the other components of the electronic payment system 100, i.e. the customer payment device 110a and/or the mobile customer communication device 110b and the payment server 150. In figure 2 the following steps are illustrated, some of which already have been described in the context of figure 1 above.

In step 201 of figure 2, the mobile merchant communication device 120 and the monitoring server 140 interact such that the monitoring server 140 obtains a second integrity status data set 128' from the mobile merchant communication device 120. As already described above, the monitoring server 140 may pull the second integrity status data set 128' from the mobile merchant communication device 120 or the mobile merchant communication device 120 may actively push the second integrity status data set 128' to the monitoring server 140. Based on the second integrity status data set 128' the monitoring server 140 may verify and update the current security integrity status of the mobile merchant communication device 120.

In step 203 of figure 2, the mobile merchant communication device 120 requests from the payment server 150 processing of a payment transaction between the mobile merchant communication device 120 and the customer payment device 110a, which, as already described above, may be a physical payment card 110a or implemented in software as a component of the mobile customer communication device 110b.

In step 205 of figure 2, the payment server 150 sends an integrity status request to the monitoring server 140 for obtaining information about the integrity status of the mobile merchant communication device 120, in response to the request from the mobile merchant communication device 120.

In step 207 of figure 2, which may be performed substantially in parallel with steps 203 and/or 205, the monitoring server 140 obtains from the mobile merchant communication device 120, as described above, the first integrity status data set 128 indicative of the current security integrity status of the mobile merchant communication device 120. As already described above, in an embodiment, the monitoring server 140 may skip this step, in case the time passed since the latest regular background monitoring (step 101) indicated as T1 in figure 2 is smaller than the pre-defined time interval threshold. In an embodiment, the time interval threshold may be, for instance, in the range between 10 and 30 seconds.

In step 209 of figure 2, the processing circuitry 141 of the monitoring server 140 determines, i.e. verifies the current security integrity status of the mobile merchant communication device 120 based on the first integrity status data set 128 obtained by the monitoring server 140 in step 207 (and possibly a portion of the second integrity status data set 128' obtained in the earlier step 201). Moreover, the communication interface 143 of the monitoring server 140 sends an integrity status message, including information about the current integrity status of the mobile merchant communication device 120, to the payment server 150 and the mobile merchant communication device 120. As already described above, the integrity status message for the mobile merchant communication device 120 includes a first time stamp indicating the current time of the monitoring server 140.

In step 210 of figure 2, the processing circuitry 121 of the mobile merchant communication device 120 adds a second time stamp indicating the current time of the mobile merchant communication device 120 to the integrity status message. The communication interface 123 of the mobile merchant communication device 120 forwards the integrity status message, including the information about the current integrity status of the mobile merchant communication device 120, the first time stamp provided by the monitoring server 140 and the second time stamp provided by the mobile merchant communication device 120, to the mobile customer communication device 110b.

In step 211 of figure 2, the payment server 150, in response to the integrity status message from the monitoring server 140, authorizes the payment transaction by sending a corresponding message to the mobile merchant communication device 120.

In step 213 of figure 2, the mobile merchant communication device 120 interacts with the customer payment device 110a and/or the mobile customer communication device 110b for further processing and completing the payment transaction.

In step 215 of figure 2, the monitoring server 140 may interact with the mobile merchant communication device 120 for obtaining a further second integrity status data set 128' from the mobile merchant communication device 120 as part of the regular, possibly periodic background monitoring. Based on the current integrity status data the monitoring server 140 may verify and update the security integrity status of the mobile merchant communication device 120. As illustrated in figure 2 by the time interval T2, the monitoring server 140 may be configured to perform the background monitoring of the mobile merchant communication device 120 with a constant period of, for instance, 5 minutes.

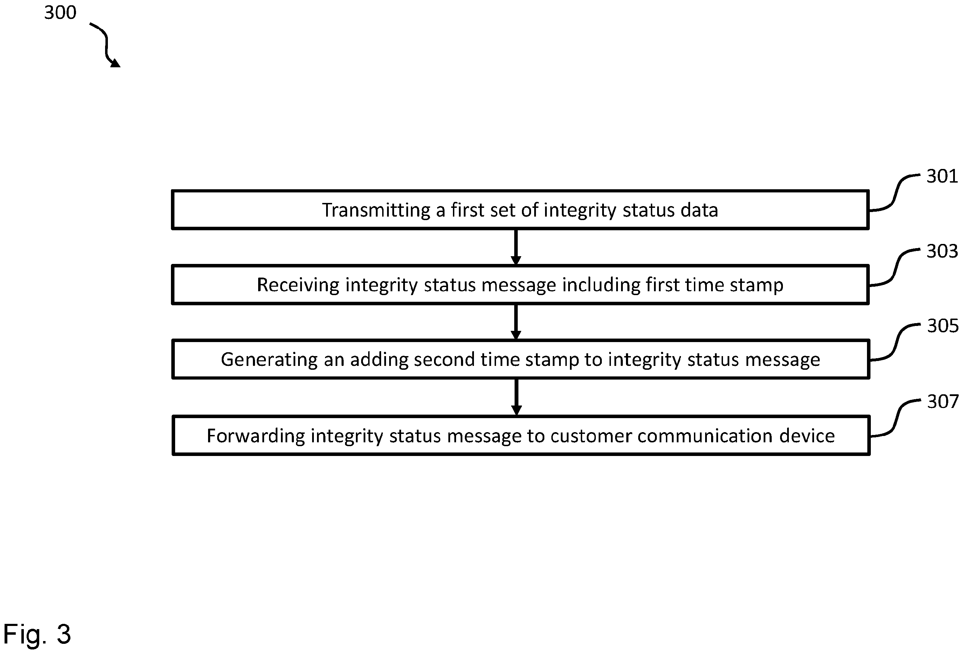

Figure 3 shows a flow diagram illustrating steps of a method 300 for processing an electronic payment transaction with the mobile merchant communication device 120. The method 300 comprises the steps of:
transmitting 301 the first integrity status data set 128 to the monitoring server 140, wherein, as already described above, the first integrity status data set 128 is indicative of the current integrity status of the mobile merchant communication device 120;
in response to a determination of the integrity status of the mobile merchant communication device 120 by the monitoring server 140 based on the first integrity status data set 128, receiving 303 an integrity status message from the monitoring server 140, wherein the integrity status message comprises information about the integrity status of the mobile merchant communication device 120 determined by the monitoring server 140 and a first time stamp provided by the monitoring server 140;
generating 305 a second time stamp and adding the second time stamp to the integrity status message; and
forwarding 307 the integrity status message, including the information about the integrity status of the mobile merchant communication device 120 determined by the monitoring server 140, the first time stamp provided by the monitoring server 140 and the second time stamp, to a mobile customer communication device 110b.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A mobile merchant communication device (120) for processing an electronic payment transaction with a customer payment device (110a), wherein the mobile merchant communication device (120) comprises:
a communication interface (123) configured to transmit a first integrity status data set (128) to a monitoring server (140), wherein the first integrity status data set (128) is indicative of an integrity status of the mobile merchant communication device (120), and, in response to a determination of the integrity status of the mobile merchant communication device (120) by the monitoring server (140), receive an integrity status message from the monitoring server (140), wherein the integrity status message comprises information about the integrity status of the mobile merchant communication device (120) determined by the monitoring server (140) and a first time stamp; and
a processing circuitry (121) configured to generate a second time stamp and to add the second time stamp to the integrity status message;
wherein the communication interface (123) is further configured to forward the integrity status message, including the information about the integrity status of the mobile merchant communication device (120) determined by the monitoring server (140), the first time stamp and the second time stamp, to a mobile customer communication device (110b).

2. The mobile merchant communication device (120) of claim 1, wherein the customer payment device (110a) is an electronic chip card (110a) and wherein the communication interface (123) is configured to communicate with the electronic chip card (110a).

3. The mobile merchant communication device (120) of claim 1, wherein the customer payment device (110a) is implemented as a component of the mobile customer communication device (110b).

4. The mobile merchant communication device (120) of any one of the preceding claims, wherein the processing circuitry (121) is further configured to generate a digital signature of the integrity status message, including the information about the integrity status of the mobile merchant communication device (120) determined by the monitoring server (140), the first time stamp and the second time stamp, and to forward the digital signature together with the integrity status message to the mobile customer communication device (110b).

5. The mobile merchant communication device (120) of any one of the preceding claims, wherein the integrity status message received from the monitoring server (140) further includes a digital signature generated by the monitoring server (140) of the information about the integrity status of the mobile merchant communication device (120) determined by the monitoring server (140) and/or the first time stamp.

6. The mobile merchant communication device (120) of any one of the preceding claims, wherein the communication interface (123) is configured to transmit at a plurality of times a respective second integrity status data set (128') to the monitoring server (140), wherein the respective second integrity status data set (128') is indicative of the integrity status of the mobile merchant communication device (120).

7. The mobile merchant communication device (120) of claim 6, wherein the processing circuitry (121) is configured to implement a monitoring client, wherein the monitoring client is configured to actively send at the plurality of scheduled times the respective second integrity status data set (128') to the monitoring server (140).

8. A monitoring server (140) for monitoring an integrity status of a mobile merchant communication device (120), the mobile merchant communication device (120) being configured to interact with a customer payment device (110a) for processing a payment transaction, wherein the monitoring server (140) comprises:
a communication interface (143) configured to obtain a first integrity status data set (128) from the mobile merchant communication device (120), wherein the first integrity status data set (128) is indicative of an integrity status of the mobile merchant communication device (120); and
a processing circuitry (141) configured to determine the integrity status of the mobile merchant communication device (120) based on the first integrity status data set (128);
wherein the communication interface (143) is further configured to, in response to the determination of the integrity status of the mobile merchant communication device (120), transmit an integrity status message to the mobile merchant communication device (120), wherein the integrity status message comprises information about the integrity status of the mobile merchant communication device (120) determined by the processing circuitry (141) and a first time stamp generated by the processing circuitry (141)
wherein the communication interface (143) is configured to, in response to the determination of the integrity status of the mobile merchant communication device (120), transmit the integrity status message to the mobile merchant communication device (120) for the mobile merchant communication device (120) to generate a second time stamp, to add the second time stamp to the integrity status message and to forward the integrity status message, including the information about the integrity status of the mobile merchant communication device (120) determined by the monitoring server (140), the first time stamp and the second time stamp, to a mobile customer communication device (110b).

9. The monitoring server (140) of claim 8, wherein the communication interface (143) is further configured to obtain at a plurality of times a respective second integrity status data set (128') from the mobile merchant communication device (120), wherein each second integrity status data set (128') is indicative of the current integrity status of the mobile merchant communication device (120) and wherein the processing circuitry (141) is configured to determine the current integrity status of the mobile merchant communication device (120) on the basis of the respective second integrity status data set (128').

10. The monitoring server (140) of claim 9, wherein the plurality of times are regularly spaced in time.

11. The monitoring server (140) of claim 9 or 10, wherein the first integrity status data set (128) and/or the second integrity status data set (128') comprises data indicative of whether a bootloader of the mobile merchant communication device (120) is unlocked.

12. The monitoring server (140) of any one of claims 9 to 11, wherein the first integrity status data set (128) and/or the second integrity status data set (128') comprises a chain of certificates for attesting the integrity of one or more cryptographic keys of the mobile merchant communication device (120) and wherein the processing circuitry (141) is configured to determine the current integrity status of the mobile merchant communication device (120) by verifying the integrity of the one or more cryptographic keys of the mobile merchant communication device (120) based on the chain of certificates.

13. The monitoring server (140) of any one of claims 9 to 12, wherein the mobile merchant communication device (120) comprises a payment software application configured to process the payment transaction, wherein the first integrity status data set (128) and/or the second integrity status data set (128') comprises data indicative of a version number of the payment software application and wherein the processing circuitry (141) is configured to determine the current integrity status of the mobile merchant communication device (120) based on the version number of the payment software application.

14. The monitoring server (140) of any one of claims 9 to 13, wherein the first integrity status data set (128) and/or the second integrity status data set (128') comprises data from a gyro sensor of the mobile merchant communication device (120) and wherein the processing circuitry (141) is configured to determine the current integrity status of the mobile merchant communication device (120) by determining whether the data from the gyro sensor of the mobile merchant communication device (120) indicate a movement and/or rotation of the mobile merchant communication device (120).

15. The monitoring server (140) of any one of claims 9 to 14, wherein the first integrity status data set (128) and/or the second integrity status data set (128') comprises a list of software applications installed on the mobile merchant communication device (120) and wherein the processing circuitry (141) is configured to determine the current integrity status of the mobile merchant communication device (120) by comparing the list of software applications installed on the mobile merchant communication device (120) with a black list of software applications.

16. The monitoring server (140) of any one of claims 9 to 15, wherein the respective second integrity status data set (128') comprises more integrity status data indicative of the current integrity status of the mobile merchant communication device (120) than the first integrity status data set (128).

17. The monitoring server (140) of any one of claims 9 to 16, wherein the communication interface (143) is configured to obtain prior to obtaining the next second integrity status data set (128') the first integrity status data set (128) from the mobile merchant communication device (120) for processing the payment transaction, in case the time elapsed since obtaining the most recent second integrity status data set (128') is larger than a pre-defined time interval threshold.

18. The monitoring server (140) of claim 17, wherein the processing circuitry (141) is configured, in response to a request from the payment server (150), to determine the current integrity status of the mobile merchant communication device (120) on the basis of the first integrity status data set (128) and/or the second integrity status data set (128') and to send information about the current integrity status of the mobile merchant communication device (120) to the payment server (150).

19. The monitoring server (140) of any one of claims 8 to 18, wherein the communication interface (143) is further configured to receive a digital signature of the first integrity status data set (128) and to verify the digital signature of the first integrity status data set (128) with a public key of the mobile merchant communication device (120).

20. An electronic payment system (100), comprising:
a mobile merchant communication device (120) according to any one of claims 1 to 7;
a monitoring server (140) according to any one of claims 8 to 19;
at least one customer payment device (110a) and/or a mobile customer communication device (110b); and
a payment transaction server (150), wherein the payment transaction server (150) is configured to transmit a request to the monitoring server (140) for receiving information about a current integrity status of the mobile merchant communication device (120) and to authorize a payment transaction based on the information about the current integrity status of the mobile merchant communication device (120).

21. A method (300) for processing an electronic payment transaction with a mobile merchant communication device (120), wherein the method (300) comprises:
transmitting (301) a first integrity status data set (128) to a monitoring server (140), wherein the first integrity status data set (128) is indicative of an integrity status of the mobile merchant communication device (120);
in response to a determination of the integrity status of the mobile merchant communication device (120) by the monitoring server (140) based on the first integrity status data set (128), receiving (303) an integrity status message from the monitoring server (140), wherein the integrity status message comprises information about the integrity status of the mobile merchant communication device (120) determined by the monitoring server (140) and a first time stamp provided by the monitoring server (140);
generating (305) a second time stamp and adding the second time stamp to the integrity status message; and
forwarding (307) the integrity status message, including the information about the integrity status of the mobile merchant communication device (120) determined by the monitoring server (140), the first time stamp provided by the monitoring server (140) and the second time stamp, to a mobile customer communication device (110b).

## Patentansprüche

1. Mobile Händlerkommunikationsvorrichtung (120) zum Verarbeiten einer elektronischen Zahlungstransaktion mit einer Kundenzahlungsvorrichtung (110a), wobei die mobile Händlerkommunikationsvorrichtung (120) umfasst:
eine Kommunikationsschnittstelle (123), die ausgebildet ist, einen ersten Integritätsstatusdatensatz (128) an einen Überwachungsserver (140) zu übertragen, wobei der erste Integritätsstatusdatensatz (128) einen Integritätsstatus der mobilen Händlerkommunikationsvorrichtung (120) anzeigt, und ansprechend auf eine Bestimmung des Integritätsstatus der mobilen Händlerkommunikationsvorrichtung (120) durch den Überwachungsserver (140) eine Integritätsstatusnachricht von dem Überwachungsserver (140) zu empfangen, wobei die Integritätsstatusnachricht Informationen über den Integritätsstatus der mobilen Händlerkommunikationsvorrichtung (120), der von dem Überwachungsserver (140) bestimmt wurde, und einen ersten Zeitstempel umfasst; und
eine Verarbeitungsschaltung (121), die ausgebildet ist, einen zweiten Zeitstempel zu erzeugen und den zweiten Zeitstempel der Integritätsstatusnachricht hinzuzufügen;
wobei die Kommunikationsschnittstelle (123) ferner ausgebildet ist, die Integritätsstatusnachricht, welche die von dem Überwachungsserver (140) bestimmten Informationen über den Integritätsstatus der mobilen Händlerkommunikationsvorrichtung (120), den ersten Zeitstempel und den zweiten Zeitstempel umfasst, an eine mobile Kundenkommunikationsvorrichtung (11 0b) weiterzuleiten.

2. Mobile Händlerkommunikationsvorrichtung (120) nach Anspruch 1, wobei die Kundenzahlungsvorrichtung (110a) eine elektronische Chipkarte (110a) ist und wobei die Kommunikationsschnittstelle (123) ausgebildet ist, mit der elektronischen Chipkarte (110a) zu kommunizieren.

3. Mobile Händlerkommunikationsvorrichtung (120) nach Anspruch 1, wobei die Kundenzahlungsvorrichtung (110a) als Komponente der mobilen Kundenkommunikationsvorrichtung (11 0b) implementiert ist.

4. Mobile Händlerkommunikationsvorrichtung (120) nach einem der vorhergehenden Ansprüche, wobei die Verarbeitungsschaltung (121) ferner ausgebildet ist, eine digitale Signatur der Integritätsstatusnachricht zu erzeugen, die die von dem Überwachungsserver (140) bestimmten Informationen über den Integritätsstatus der mobilen Händlerkommunikationsvorrichtung (120), den ersten Zeitstempel und den zweiten Zeitstempel umfasst, und die digitale Signatur zusammen mit der Integritätsstatusnachricht an die mobile Kundenkommunikationsvorrichtung (110b) weiterzuleiten.

5. Mobile Händlerkommunikationsvorrichtung (120) nach einem der vorhergehenden Ansprüche, wobei die von dem Überwachungsserver (140) empfangene Integritätsstatusnachricht ferner eine von dem Überwachungsserver (140) erzeugte digitale Signatur der von dem Überwachungsserver (140) bestimmten Informationen über den Integritätsstatus der mobilen Händlerkommunikationsvorrichtung (120) und/oder den ersten Zeitstempel umfasst.

6. Mobile Händlerkommunikationsvorrichtung (120) nach einem der vorhergehenden Ansprüche, wobei die Kommunikationsschnittstelle (123) ausgebildet ist, an einer Vielzahl von Zeitpunkten einen jeweiligen zweiten Integritätsstatusdatensatz (128') an den Überwachungsserver (140) zu übertragen, wobei der jeweilige zweite Integritätsstatusdatensatz (128') den Integritätsstatus der mobilen Händlerkommunikationsvorrichtung (120) anzeigt.

7. Mobile Händlerkommunikationsvorrichtung (120) nach Anspruch 6, wobei die Verarbeitungsschaltung (121) ausgebildet ist, einen Überwachungsclient zu implementieren, wobei der Überwachungsclient ausgebildet ist, an der Vielzahl von geplanten Zeitpunkten den jeweiligen zweiten Integritätsstatusdatensatz (128') aktiv an den Überwachungsserver (140) zu senden.

8. Überwachungsserver (140) zum Überwachen eines Integritätsstatus einer mobilen Händlerkommunikationsvorrichtung (120), wobei die mobile Händlerkommunikationsvorrichtung (120) ausgebildet ist, mit einer Kundenzahlungsvorrichtung (110a) zur Verarbeitung einer Zahlungstransaktion zu interagieren, wobei der Überwachungsserver (140) Folgendes umfasst:
eine Kommunikationsschnittstelle (143), die ausgebildet ist, einen ersten Integritätsstatusdatensatz (128) von der mobilen Händlerkommunikationsvorrichtung (120) zu erhalten, wobei der erste Integritätsstatusdatensatz (128) einen Integritätsstatus der mobilen Händlerkommunikationsvorrichtung (120) anzeigt; und
eine Verarbeitungsschaltung (141), die ausgebildet ist, den Integritätsstatus der mobilen Händlerkommunikationsvorrichtung (120) basierend auf dem ersten Integritätsstatusdatensatz (128) zu bestimmen;
wobei die Kommunikationsschnittstelle (143) ferner ausgebildet ist, ansprechend auf die Bestimmung des Integritätsstatus der mobilen Händlerkommunikationsvorrichtung (120) eine Integritätsstatusnachricht an die mobile Händlerkommunikationsvorrichtung (120) zu übertragen, wobei die Integritätsstatusnachricht Informationen über den Integritätsstatus der mobilen Händlerkommunikationsvorrichtung (120), die von der Verarbeitungsschaltung (141) bestimmt wurden, und einen ersten Zeitstempel umfasst, der von der Verarbeitungsschaltung (141) erzeugt wurde,
wobei die Kommunikationsschnittstelle (143) ausgebildet ist, ansprechend auf die Bestimmung des Integritätsstatus der mobilen Händlerkommunikationsvorrichtung (120) die Integritätsstatusnachricht an die mobile Händlerkommunikationsvorrichtung (120) zu übertragen, damit die mobile Händlerkommunikationsvorrichtung (120) einen zweiten Zeitstempel erzeugt, den zweiten Zeitstempel der Integritätsstatusnachricht hinzufügt und die Integritätsstatusnachricht, welche die von dem Überwachungsserver (140) bestimmten Informationen über den Integritätsstatus der mobilen Händlerkommunikationsvorrichtung (120), den ersten Zeitstempel und den zweiten Zeitstempel umfasst, an eine mobile Kundenkommunikationsvorrichtung (110b) weiterleitet.

9. Überwachungsserver (140) nach Anspruch 8, wobei die Kommunikationsschnittstelle (143) ferner ausgebildet ist, an einer Vielzahl von Zeitpunkten einen jeweiligen zweiten Integritätsstatusdatensatz (128') von der mobilen Händlerkommunikationsvorrichtung (120) abzurufen, wobei jeder zweite Integritätsstatusdatensatz (128') den aktuellen Integritätsstatus der mobilen Händlerkommunikationsvorrichtung (120) anzeigt, und wobei die Verarbeitungsschaltung (141) ausgebildet ist, den aktuellen Integritätsstatus der mobilen Händlerkommunikationsvorrichtung (120) auf der Grundlage des jeweiligen zweiten Integritätsstatusdatensatzes (128') zu bestimmen.

10. Überwachungsserver (140) nach Anspruch 9, wobei die Vielzahl von Zeitpunkten in regelmäßigen Abständen zueinander stehen.

11. Überwachungsserver (140) nach Anspruch 9 oder 10, wobei der erste Integritätsstatusdatensatz (128) und/oder der zweite Integritätsstatusdatensatz (128') Daten umfassen, die anzeigen, ob ein Bootloader der mobilen Händlerkommunikationsvorrichtung (120) entsperrt ist.

12. Überwachungsserver (140) nach einem der Ansprüche 9 bis 11, wobei der erste Integritätsstatusdatensatz (128) und/oder der zweite Integritätsstatusdatensatz (128') eine Zertifikatskette zum Bestätigen der Integrität eines oder mehrerer kryptografischer Schlüssel der mobilen Händlerkommunikationsvorrichtung (120) umfasst, und wobei die Verarbeitungsschaltung (141) ausgebildet ist, den aktuellen Integritätsstatus der mobilen Händlerkommunikationsvorrichtung (120) durch Überprüfen der Integrität des einen oder der mehreren kryptografischen Schlüssel der mobilen Händlerkommunikationsvorrichtung (120) basierend auf der Zertifikatskette zu bestimmen.

13. Überwachungsserver (140) nach einem der Ansprüche 9 bis 12, wobei die mobile Händlerkommunikationsvorrichtung (120) eine Zahlungssoftwareanwendung umfasst, die ausgebildet ist, die Zahlungstransaktion zu verarbeiten, wobei der erste Integritätsstatusdatensatz (128) und/oder der zweite Integritätsstatusdatensatz (128') Daten umfassen, die eine Versionsnummer der Zahlungssoftwareanwendung angeben, und wobei die Verarbeitungsschaltung (141) ausgebildet ist, den aktuellen Integritätsstatus der mobilen Händlerkommunikationsvorrichtung (120) basierend auf der Versionsnummer der Zahlungssoftwareanwendung zu bestimmen.

14. Überwachungsserver (140) nach einem der Ansprüche 9 bis 13, wobei der erste Integritätsstatusdatensatz (128) und/oder der zweite Integritätsstatusdatensatz (128') Daten von einem Gyrosensor der mobilen Händlerkommunikationsvorrichtung (120) umfasst, und wobei die Verarbeitungsschaltung (141) ausgebildet ist, den aktuellen Integritätsstatus der mobilen Händlerkommunikationsvorrichtung (120) dadurch zu bestimmen, dass sie bestimmt, ob die Daten von dem Gyrosensor der mobilen Händlerkommunikationsvorrichtung (120) eine Bewegung und/oder Drehung der mobilen Händlerkommunikationsvorrichtung (120) anzeigen.

15. Überwachungsserver (140) nach einem der Ansprüche 9 bis 14, wobei der erste Integritätsstatusdatensatz (128) und/oder der zweite Integritätsstatusdatensatz (128') eine Liste von Softwareanwendungen umfasst, die auf der mobilen Händlerkommunikationsvorrichtung (120) installiert sind, und wobei die Verarbeitungsschaltung (141) ausgebildet ist, den aktuellen Integritätsstatus der mobilen Händlerkommunikationsvorrichtung (120) durch Vergleichen der Liste von Softwareanwendungen, die auf der mobilen Händlerkommunikationsvorrichtung (120) installiert sind, mit einer schwarzen Liste von Softwareanwendungen zu bestimmen.

16. Überwachungsserver (140) nach einem der Ansprüche 9 bis 15, wobei der jeweilige zweite Integritätsstatusdatensatz (128') mehr Integritätsstatusdaten umfasst, die den aktuellen Integritätsstatus der mobilen Händlerkommunikationsvorrichtung (120) anzeigen, als der erste Integritätsstatusdatensatz (128).

17. Überwachungsserver (140) nach einem der Ansprüche 9 bis 16, wobei die Kommunikationsschnittstelle (143) ausgebildet ist, vor dem Erhalt des nächsten zweiten Integritätsstatusdatensatzes (128') den ersten Integritätsstatusdatensatz (128) von der mobilen Händlerkommunikationsvorrichtung (120) zur Verarbeitung der Zahlungstransaktion zu erhalten, falls die seit dem Erhalt des aktuellsten zweiten Integritätsstatusdatensatzes (128') vergangene Zeit größer als ein vordefinierter Zeitintervallschwellenwert ist.

18. Überwachungsserver (140) nach Anspruch 17, wobei die Verarbeitungsschaltung (141) ausgebildet ist, ansprechend auf eine Anforderung des Zahlungsservers (150) den aktuellen Integritätsstatus der mobilen Händlerkommunikationsvorrichtung (120) auf der Grundlage des ersten Integritätsstatusdatensatzes (128) und/oder des zweiten Integritätsstatusdatensatzes (128') zu bestimmen und Informationen über den aktuellen Integritätsstatus der mobilen Händlerkommunikationsvorrichtung (120) an den Zahlungsserver (150) zu senden.

19. Überwachungsserver (140) nach einem der Ansprüche 8 bis 18, wobei die Kommunikationsschnittstelle (143) ferner ausgebildet ist, eine digitale Signatur des ersten Integritätsstatusdatensatzes (128) zu empfangen und die digitale Signatur des ersten Integritätsstatusdatensatzes (128) mit einem öffentlichen Schlüssel der mobilen Händlerkommunikationsvorrichtung (120) zu überprüfen.

20. Elektronisches Zahlungssystem (100), umfassend:
eine mobile Händlerkommunikationsvorrichtung (120) nach einem der Ansprüche 1 bis 7;
einen Überwachungsserver (140) nach einem der Ansprüche 8 bis 19;
mindestens eine Kundenzahlungsvorrichtung (110a) und/oder eine mobile Kundenkommunikationsvorrichtung (110b); und
einen Zahlungstransaktionsserver (150), wobei der Zahlungstransaktionsserver (150) ausgebildet ist, eine Anforderung zum Empfangen von Informationen über einen aktuellen Integritätsstatus der mobilen Händlerkommunikationsvorrichtung (120) an den Überwachungsserver (140) zu übertragen und eine Zahlungstransaktion basierend auf den Informationen über den aktuellen Integritätsstatus der mobilen Händlerkommunikationsvorrichtung (120) zu autorisieren.

21. Verfahren (300) zum Verarbeiten einer elektronischen Zahlungstransaktion mit einer mobilen Händlerkommunikationsvorrichtung (120), wobei das Verfahren (300) umfasst:
Übertragen (301) eines ersten Integritätsstatusdatensatzes (128) an einen Überwachungsserver (140), wobei der erste Integritätsstatusdatensatz (128) einen Integritätsstatus der mobilen Händlerkommunikationsvorrichtung (120) angibt;
ansprechend auf eine Bestimmung des Integritätsstatus der mobilen Händlerkommunikationsvorrichtung (120) durch den Überwachungsserver (140) basierend auf dem ersten Integritätsstatusdatensatz (128), Empfangen (303) einer Integritätsstatusnachricht von dem Überwachungsserver (140), wobei die Integritätsstatusnachricht Informationen über den Integritätsstatus der mobilen Händlerkommunikationsvorrichtung (120), die von dem Überwachungsserver (140) bestimmt wurden, und einen ersten Zeitstempel umfasst, der von dem Überwachungsserver (140) bereitgestellt wird;
Erzeugen (305) eines zweiten Zeitstempels und Hinzufügen des zweiten Zeitstempels zu der Integritätsstatusnachricht; und
Weiterleiten (307) der Integritätsstatusnachricht, welche die von dem Überwachungsserver (140) bestimmten Informationen über den Integritätsstatus der mobilen Händlerkommunikationsvorrichtung (120), den von dem Überwachungsserver (140) bereitgestellten ersten Zeitstempel und den zweiten Zeitstempel umfasst, an eine mobile Kundenkommunikationsvorrichtung (110b).

## Revendications

1. Dispositif de communication mobile pour commerçant (120) permettant de traiter une transaction de paiement électronique avec un dispositif de paiement client (110a), le dispositif de communication mobile pour commerçant (120) comprenant :
une interface de communication (123) configurée pour transmettre un premier ensemble de données d'état d'intégrité (128) à un serveur de surveillance (140), le premier ensemble de données d'état d'intégrité (128) indiquant un état d'intégrité du dispositif de communication mobile de commerçant (120), et, en réponse à une détermination de l'état d'intégrité du dispositif de communication mobile de commerçant (120) par le serveur de surveillance (140), recevoir un message d'état d'intégrité du serveur de surveillance (140), le message d'état d'intégrité comprenant des informations sur l'état d'intégrité du dispositif de communication mobile de commerçant (120) déterminé par le serveur de surveillance (140) et un premier horodatage ; et
un circuit de traitement (121) configuré pour générer un second horodatage et pour ajouter le second horodatage au message d'état d'intégrité ;
dans lequel l'interface de communication (123) est en outre configurée pour transmettre le message d'état d'intégrité, comprenant les informations sur l'état d'intégrité du dispositif de communication mobile du commerçant (120) déterminé par le serveur de surveillance (140), le premier horodatage et le deuxième horodatage, à un dispositif de communication mobile du client (110b).

2. Dispositif de communication mobile de commerçant (120) selon la revendication 1, dans lequel le dispositif de paiement client (110a) est une carte à puce électronique (110a) et dans lequel l'interface de communication (123) est configurée pour communiquer avec la carte à puce électronique (110a).

3. Dispositif de communication mobile de commerçant (120) selon la revendication 1, dans lequel le dispositif de paiement client (110a) est mis en oeuvre en tant que composant du dispositif de communication mobile de client (110b).

4. Dispositif de communication mobile de commerçant (120) selon l'une quelconque des revendications précédentes, dans lequel le circuit de traitement (121) est en outre configuré pour générer une signature numérique du message d'état d'intégrité, comprenant les informations sur l'état d'intégrité du dispositif de communication mobile de commerçant (120) déterminé par le serveur de surveillance (140), le premier horodatage et le second horodatage, et pour transmettre la signature numérique avec le message d'état d'intégrité au dispositif de communication mobile de client (110b).

5. Dispositif de communication mobile de commerçant (120) selon l'une quelconque des revendications précédentes, dans lequel le message d'état d'intégrité reçu du serveur de surveillance (140) comprend en outre une signature numérique générée par le serveur de surveillance (140) des informations sur l'état d'intégrité du dispositif de communication mobile de commerçant (120) déterminé par le serveur de surveillance (140) et/ou le premier horodatage.

6. Dispositif de communication mobile de commerçant (120) selon l'une quelconque des revendications précédentes, dans lequel l'interface de communication (123) est configurée pour transmettre à plusieurs reprises un second ensemble de données d'état d'intégrité respectif (128') au serveur de surveillance (140), le second ensemble de données d'état d'intégrité respectif (128') étant indicatif de l'état d'intégrité du dispositif de communication mobile de commerçant (120).

7. Dispositif de communication mobile de commerçant (120) selon la revendication 6, dans lequel le circuit de traitement (121) est configuré pour mettre en oeuvre un client de surveillance, le client de surveillance étant configuré pour envoyer activement à la pluralité d'heures programmées le deuxième ensemble de données d'état d'intégrité respectif (128') au serveur de surveillance (140).

8. Serveur de surveillance (140) pour surveiller un état d'intégrité d'un dispositif de communication mobile de commerçant (120), le dispositif de communication mobile de commerçant (120) étant configuré pour interagir avec un dispositif de paiement client (110a) pour traiter une transaction de paiement, le serveur de surveillance (140) comprenant :
une interface de communication (143) configurée pour obtenir un premier ensemble de données d'état d'intégrité (128) à partir du dispositif de communication mobile de commerçant (120), le premier ensemble de données d'état d'intégrité (128) indiquant un état d'intégrité du dispositif de communication mobile de commerçant (120) ; et
un circuit de traitement (141) configuré pour déterminer l'état d'intégrité du dispositif de communication marchand mobile (120) sur la base du premier ensemble de données d'état d'intégrité (128) ;
dans lequel l' interface de communication (143) est en outre configurée pour, en réponse à la détermination de l'état d'intégrité du dispositif de communication mobile de commerçant (120), transmettre un message d'état d'intégrité au dispositif de communication mobile de commerçant (120), dans lequel le message d'état d'intégrité comprend des informations sur l'état d'intégrité du dispositif de communication mobile de commerçant (120) déterminé par le circuit de traitement (141) et un premier horodatage généré par le circuit de traitement (141),
dans lequel l'interface de communication (143) est configurée pour, en réponse à la détermination de l'état d'intégrité du dispositif de communication mobile de commerçant (120), transmettre le message d'état d'intégrité au dispositif de communication mobile de commerçant (120) pour que le dispositif de communication mobile de commerçant (120) génère un second horodatage, pour ajouter le second horodatage au message d'état d'intégrité et pour transmettre le message d'état d'intégrité, comprenant les informations sur l'état d'intégrité du dispositif de communication mobile de commerçant (120) déterminé par le serveur de surveillance (140), le premier horodatage et le second horodatage, à un dispositif de communication mobile de client (110b).

9. Serveur de surveillance (140) selon la revendication 8, dans lequel l'interface de communication (143) est en outre configurée pour obtenir à plusieurs reprises un second ensemble de données d'état d'intégrité respectif (128') à partir du dispositif de communication mobile de commerçant (120), chaque second ensemble de données d'état d'intégrité (128') étant indicatif de l'état d'intégrité actuel du dispositif de communication mobile de commerçant (120) et dans lequel le circuit de traitement (141) est configuré pour déterminer l'état d'intégrité actuel du dispositif de communication mobile de commerçant (120) sur la base du second ensemble de données d'état d'intégrité respectif (128').

10. Serveur de surveillance (140) selon la revendication 9, dans lequel la pluralité de temps est régulièrement espacée dans le temps.

11. Serveur de surveillance (140) selon la revendication 9 ou 10, dans lequel le premier ensemble de données d'état d'intégrité (128) et/ou le second ensemble de données d'état d'intégrité (128') comprennent des données indiquant si un chargeur de démarrage du dispositif de communication marchand mobile (120) est déverrouillé.

12. Serveur de surveillance (140) selon l'une quelconque des revendications 9 à 11, dans lequel le premier ensemble de données d'état d'intégrité (128) et/ou le second ensemble de données d'état d'intégrité (128') comprend une chaîne de certificats pour attester de l'intégrité d'une ou plusieurs clés cryptographiques du dispositif de communication marchand mobile (120) et dans lequel le circuit de traitement (141) est configuré pour déterminer l'état d'intégrité actuel du dispositif de communication marchand mobile (120) en vérifiant l'intégrité de la ou des clés cryptographiques du dispositif de communication marchand mobile (120) sur la base de la chaîne de certificats.

13. Serveur de surveillance (140) selon l'une quelconque des revendications 9 à 12, dans lequel le dispositif de communication mobile de commerçant (120) comprend une application logicielle de paiement configurée pour traiter la transaction de paiement, dans lequel le premier ensemble de données d'état d'intégrité (128) et/ou le second ensemble de données d'état d'intégrité (128') comprennent des données indiquant un numéro de version de l'application logicielle de paiement et dans lequel le circuit de traitement (141) est configuré pour déterminer l'état d'intégrité actuel du dispositif de communication mobile de commerçant (120) sur la base du numéro de version de l'application logicielle de paiement.

14. Serveur de surveillance (140) selon l'une quelconque des revendications 9 à 13, dans lequel le premier ensemble de données d'état d'intégrité (128) et/ou le second ensemble de données d'état d'intégrité (128') comprennent des données provenant d'un capteur gyroscopique du dispositif de communication marchand mobile (120) et dans lequel le circuit de traitement (141) est configuré pour déterminer l'état d'intégrité actuel du dispositif de communication marchand mobile (120) en déterminant si les données provenant du capteur gyroscopique du dispositif de communication marchand mobile (120) indiquent un mouvement et/ou une rotation du dispositif de communication marchand mobile (120).

15. Serveur de surveillance (140) selon l'une quelconque des revendications 9 à 14, dans lequel le premier ensemble de données d'état d'intégrité (128) et/ou le second ensemble de données d'état d'intégrité (128') comprend une liste d'applications logicielles installées sur le dispositif de communication marchand mobile (120) et dans lequel le circuit de traitement (141) est configuré pour déterminer l'état d'intégrité actuel du dispositif de communication marchand mobile (120) en comparant la liste d'applications logicielles installées sur le dispositif de communication marchand mobile (120) avec une liste noire d'applications logicielles.

16. Serveur de surveillance (140) selon l'une quelconque des revendications 9 à 15, dans lequel le second ensemble de données d'état d'intégrité respectif (128') comprend plus de données d'état d'intégrité indicatives de l'état d'intégrité actuel du dispositif de communication marchand mobile (120) que le premier ensemble de données d'état d'intégrité (128).

17. Serveur de surveillance (140) selon l'une quelconque des revendications 9 à 16, dans lequel l'interface de communication (143) est configurée pour obtenir avant d'obtenir le deuxième ensemble de données d'état d'intégrité suivant (128') le premier ensemble de données d'état d'intégrité (128) provenant du dispositif de communication marchand mobile (120) pour traiter la transaction de paiement, dans le cas où le temps écoulé depuis l'obtention du deuxième ensemble de données d'état d'intégrité le plus récent (128') est supérieur à un seuil d'intervalle de temps prédéfini.

18. Serveur de surveillance (140) selon la revendication 17, dans lequel le circuit de traitement (141) est configuré, en réponse à une demande du serveur de paiement (150), pour déterminer l'état d'intégrité actuel du dispositif de communication mobile de commerçant (120) sur la base du premier ensemble de données d'état d'intégrité (128) et/ou du deuxième ensemble de données d'état d'intégrité (128') et pour envoyer des informations sur l'état d'intégrité actuel du dispositif de communication mobile de commerçant (120) au serveur de paiement (150).

19. Serveur de surveillance (140) selon l'une quelconque des revendications 8 à 18, dans lequel l'interface de communication (143) est en outre configurée pour recevoir une signature numérique du premier ensemble de données d'état d'intégrité (128) et pour vérifier la signature numérique du premier ensemble de données d'état d'intégrité (128) avec une clé publique du dispositif de communication mobile de commerçant (120).

20. Système de paiement électronique (100), comprenant :
un dispositif de communication mobile de commerçant (120) selon l'une quelconque des revendications 1 à 7 ;
un serveur de surveillance (140) selon l'une quelconque des revendications 8 à 19 ;
au moins un dispositif de paiement client (110a) et/ou un dispositif de communication client mobile (110b) ; et
un serveur de transaction de paiement (150), le serveur de transaction de paiement (150) étant configuré pour transmettre une demande au serveur de surveillance (140) pour recevoir des informations sur un état d'intégrité actuel du dispositif de communication marchand mobile (120) et pour autoriser une transaction de paiement sur la base des informations sur l'état d'intégrité actuel du dispositif de communication marchand mobile (120).

21. Procédé (300) de traitement d'une transaction de paiement électronique avec un dispositif de communication marchand mobile (120), le procédé (300) comprenant :
transmettre (301) un premier ensemble de données d'état d'intégrité (128) à un serveur de surveillance (140), le premier ensemble de données d'état d'intégrité (128) indiquant un état d'intégrité du dispositif de communication mobile de commerçant (120) ;
en réponse à une détermination de l'état d'intégrité du dispositif de communication mobile de commerçant (120) par le serveur de surveillance (140) sur la base du premier ensemble de données d'état d'intégrité (128), recevoir (303) un message d'état d'intégrité en provenance du serveur de surveillance (140), le message d'état d'intégrité comprenant des informations sur l'état d'intégrité du dispositif de communication mobile de commerçant (120) déterminé par le serveur de surveillance (140) et un premier horodatage fourni par le serveur de surveillance (140) ;
générer (305) un deuxième horodatage et ajouter le deuxième horodatage au message d'état d'intégrité ; et
transmission (307) du message d'état d'intégrité, comprenant les informations sur l'état d'intégrité du dispositif de communication mobile du commerçant (120) déterminé par le serveur de surveillance (140), le premier horodatage fourni par le serveur de surveillance (140) et le deuxième horodatage, à un dispositif de communication mobile du client (110b).
